# EUROPÄISCHE PATENTSCHRIFT

(11) **EP 0 309 876 B1**
(45) Veröffentlichungstag und Bekanntmachung des Hinweises auf die Patenterteilung: **10.08.1994**
(21) Anmeldenummer: 88115436.3
(22) Anmeldetag: 21.09.1988
(51) Int. Cl.: H04N 7/087, H04N 7/00

(54) **MAC-Fernsehübertragungssystem**
MAC television transmission system
Système de transmission de télévision MAC

(30) Priorität: 30.09.1987 DE 3733472
(43) Veröffentlichungstag der Anmeldung: 05.04.1989
(73) Patentinhaber: Deutsche Thomson-Brandt GmbH, 78003 Villingen-Schwenningen (DE)
(72) Erfinder: Kluth, Hans-Jürgen, Dipl.-Ing., D-7730 VS-Villingen (DE); Bullinger, Werner, D-7730 VS-Villingen (DE)

(56) Entgegenhaltungen:
- WO-A-84/02442
- DE-A- 3 512 156
- US-A- 3 989 891
- G.T. WATERS: "Spécification des systèmes de la famille MAC/paquets", Ergänzung zu Teil 5: "Aspects particuliers du système d'identification de services", Tech. 3258-F, Oktober 1986, Seiten 293-302, Union Européenne de Radiodiffusion, Bruxelles, BE
- RADIO MENTOR, Band 31, Nr. 9, September 1965, Seiten 744-745; R. DEUBERT: "Eine automatische Pal/NTSC-Umschaltung"
- 15TH INTERNATIONAL T.V. SYMPOSIUM, Montreux, 11. - 17. Juni 1987, Seiten 181-204; C. SCHEPERS et al.: "D2 MAC, an integrated multinorm receiver"

## Beschreibung

Für die drahtlose oder drahtgebundene Übertragung von Farbfernsehsignalen sind verschiedene Systeme bekannt, die sich insbesondere durch die Art der Übertragung der Farbinformation unterscheiden. Beim NTSC-System werden die beiden Farbdifferenzsignale simultan durch Quadraturmodulation eines Farbträgers übertragen. Beim SECAM-System werden die beiden Farbdifferenzsignale zeilensequentiell durch Frequenzmodulation eines Farbträgers übertragen. Beim PAL-Farbfernsehsystem erfolgt eine simultane Übertragung mit Quadraturmodulation und gleichzeitiger Umschaltung der Phasenmodulationsrichtung zum Ausgleich von auf dem Übertragungsweg entstandenen Phasenfehlern.

Beim MAC-Übertragungssystem, das insbesondere für die Übertragung zwischen Satelliten entwickelt wurde, werden während einer Zeile zunächst ein Farbdifferenzsignal und anschließend das Leuchtdichtesignal jeweils zeitkomprimiert übertragen und bei der Wiedergabe wieder auf eine Zeile expandiert. Dabei erfolgt die Übertragung der beiden Farbdifferenzsignale zeilensequentiell, derart, daß abwechselnd in einer Zeile das Farbdifferenzsignal B-Y und in der nächsten Zeile das Farbdifferenzsignal R-Y übertragen wird.

Die unterschiedliche Art der Codierung, insbesondere der Farbdifferenzsignale, erfordert eine entsprechende Anpassung der Empfangsgeräte an das Signal. In einer gleichzeitig eingereichten Patentanmeldung EP-A-0309859 wird ein Recorder beschrieben, bei dem zur Verringerung des Übersprechens zwischen den aufgezeichneten Farbsignalen bei der Aufnahme eine besondere partielle Verzögerung der aufgezeichneten Signale erfolgt. Diese Modifizierung der Signale ist abhängig von dem jeweiligen Übertragungssystem und erfordert spezielle Maßnahmen bei Empfang eines MAC-Signals. Das ist dadurch bedingt, daß die Umschaltung zwischen den Farbdifferenzsignalen nicht wie bei PAL oder SECAM kontinuierlich über alle Bilder durchläuft. Vielmehr wird die Sequenz der sequentiell übertragenen Farbdifferenzsignale so gesteuert, daß jeweils ein Bild immer mit derselben Farbe beginnt. Bei dieser als Vollbild-Reset bezeichneten Übertragung wird somit in einer Zeile einer bestimmten Ordnungszahl von 1 - 625 eines vollständigen Bildes immer dasselbe Farbdifferenzsignal übertragen. Ein MAC-Fersehübertragungssystem wird beispielsweise in WO-A-8402442 beschrieben.

Der Erfindung liegt die Aufgabe zugrunde, eine selbsttätige Anpassung des Empfangsgerätes an das MAC-Signal zu bewirken.

Diese Aufgabe wird durch die im Anspruch 1 beschriebene Erfindung gelöst. Vorteilhafte Weiterbildungen der Erfindung sind in den Unteransprüchen beschrieben.

Das Kennsignal wird ständig übertragen, unabhängig davon, ob es sich um ein reines Schwarz/Weiß-Signal oder ein Farbsignal handelt. Das Kennsignal besteht vorzugsweise aus einem oder mehreren Wörtern mit je mehreren Bits. Die Wörter enthalten zunächst die genannte spezielle Kennung des MAC-Signals. Sie können zusätzlich eine Kennung für die Farbsequenz enthalten, d.h. angeben, welches der beiden Farbdifferenzsignale in der Zeile mit dem Kennsignal jeweils übertragen wird. Das Kennsignal kann grundsätzlich für jede Art der Anpassung des Empfangsgerätes an das MAC-Signal verwendet werden, z.B. für die beschriebene Vorbehandlung der Signale bei der Aufzeichnung, Umschaltung des Empfangsgerätes auf einen MAC-Decoder, spezielle Entzerrungsschaltungen für das Signal oder auch Betätigung einer optischen oder akustischen Anzeige, daß ein MAC-Signal empfangen wird. Die Übertragung des Kennsignals erfolgt vorzugsweise jeweils während einer Leerzeile der Vertikalaustastzeit, z.B. während der Zeilen Nr. 23 und 335.

Die Erfindung wird um folgenden anhand der Zeichnung erläutert. Darin zeigen
- **Fig. 1**: das Impulsschema während der Vertikalaustastzeit mit dem Kennsignal
- **Fig. 2**: ein Blockschaltbild für einen Videorecorder, der alternativ auf MAC-Betrieb umschaltbar ist und
- **Fig. 3, 4**: ein Ausführungsbeispiel für ein Erkennungswort, das in bestimmten Zeilen während der Vertikalaustastzeit übertragen wird.

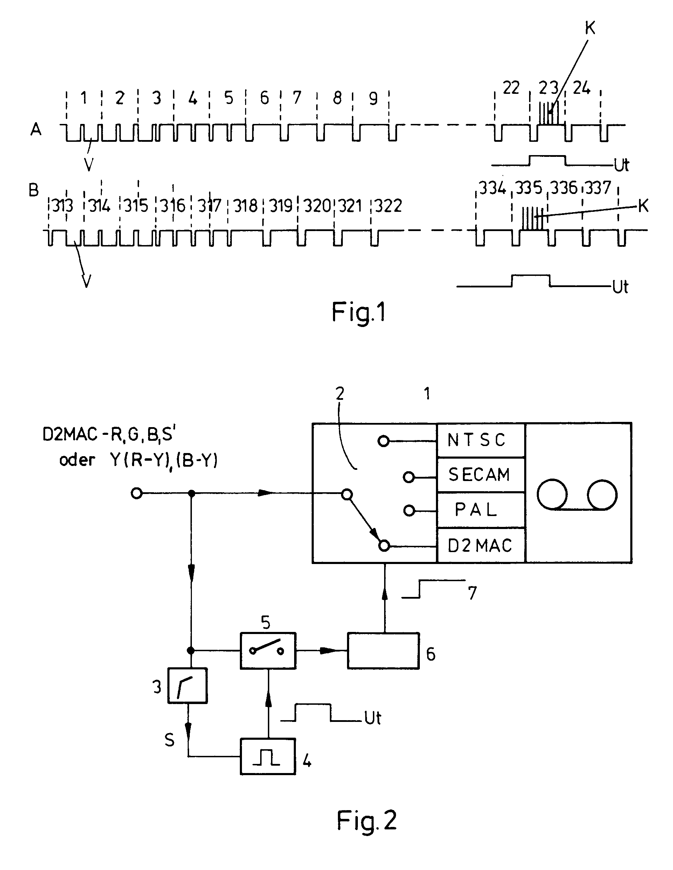

Fig. 1 zeigt das Synchronimpuls-Schema für zwei aufeinanderfolgende Halbbilder A und B gemäß dem Zeilensprungsystem. Zu Beginn des Vertikalsynchronimpulses beginnt jeweils das Halbbild A mit der Zeile Nr. 1 und das Halbbild B mit der Zeile 312,5. Jeweils während der Zeile Nr. 23 im Halbbild A und während der Zeile Nr. 335 im Halbbild B wird ein digitales Kennsignal K übertragen, das die Kennung für ein MAC-Signal und für das jeweils in dieser Zeile übertragene Farbdifferenzsignal enthält. Mit einem vom Vertikalsynchronimpuls V gestarteten Zähler wird jeweils während der Zeilen Nr. 23 und 335 ein Tastimpuls Ut erzeugt, der während dieser Zeilen das Signal auftastet und einer Erkennungschaltung zuführt.

In Fig. 2 gelant das empfangene MAC-Signal, z.B. in der Form R, G, B, S' oder Y, (R-Y), (B-Y), auf den Videorecorder 1, der auf vier verschiedene Betriebsarten für Empfang von Signalen nach NTSC, SECAM, PAL und MAC umschaltbar ist, wie durch den Umschalter 2 symbolisch dargestellt. Mit der Abtrennstufe 3 werden die Synchronimpulse S abgetrennt und dem Zähler 4 zugeführt. Der Zähler wird vom Vertikalsynchronimpuls V gestartet und erzeugt jeweils während der Zeilen Nr. 23 und 335 den Tastimpuls Ut, der das Tor 5 durchlässig steuert. Dadurch gelangt daß Kennsignal K auf die Auswertschaltung 6. Bei Empfang eines MAC-Signals erzeugt die Schaltung 6 eine Schaltspannung 7, die den Videorecorder 1 auf die spezielle Betriebsart für MAC umschaltet. Diese Umschaltung erfolgt nur, wenn in den Zeilen Nr. 23 and 335 daß spezielle MAC- Kennsignal K empfangen wird. Bei Empfang von Signalen nach einem anderen der drei genannten Systeme wird manuell oder auch selbsttätig auf die dem jeweilgen empfangenen Signal zugeordnete Betriebsweise umgeschaltet.

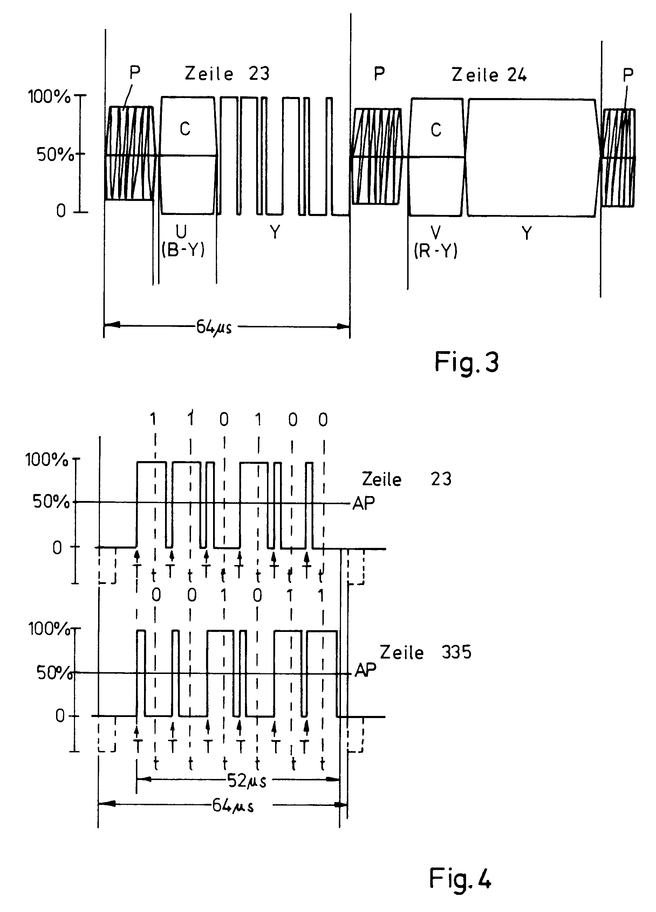

Fig. 3, 4 zeigen ein Ausführungsbeispiel für das Erkennungswort für MAC in den Zeilen 23 und 335. Dabei bedeuten
- P:: Paket aus duobinären Daten
- C:: Farbsignal
- Y:: Leuchtdichtesignal
- T:: Takt- oder Triggerflanke
- l:: Logischer High-Pegel
- Ø:: Logischer Low-Pegel
- t:: Zeitpunkt der Abfrage
- AP:: Abtrennpegel.

Fig. 3 zeigt das MAC-Signal im Basisband. Innerhalb einer Zeile von 64 µs wird zu erst ein Paket oder Datenburst P aus duobinär kodierten Daten übertragen, der Synchronisation-, Ton- und sonstige Daten enthält. Darauf folgt ein Klemmpegel mit 50% des Maximalpegels und darauf das Farbsignal oder Chromasignal C in zeitkomprimierter Form mit einem Krompressinonsfaktor von 3. Darauf folgt das um den Faktor 1,5 zeitkomprimierte Leuchtdichtesignal Y. C bedeutet entweder die sequentiellen Farbsignale U, V oder auch die sequentiellen Farbdifferenzsignale (B-Y) und (R-Y). Im Decoder wird aus den sequentiellen Farbsignal C durch Zwischenspeicher und Filter die vollständig Farbinformation R-Y und B-Y für jede Zeile zurückgewonnen. Um den Speicheraufwand im Decoder so gering wie möglich zu halten, werden die sequentiellen Farbdifferenzsignale R-Y und B-Y schon vor dem zugehörigen Leuchtdichtesignal Y übertragen. In der Spezifikation für MAC ist deshalb definiert, daß in Zeile 23 und 335 nur das Farbdifferenzsignal der Zeilen 24 bzw. 334 übertragen wird, während das Leuchtdichtesignal den Wert für Schwarz hat.

Während dieser Zeilen wird also die Zeit für das Leuchtdichtesignal nicht ausgenutzt. Deshalb wird hier das Kennsignal für MAC übertragen, mit dem zwischen MAC und anderen Signale unterschieden werden kann. Die Zeilen mit den Nummern 23 und 335 können durch Zählung der Zeilen vom Bildanfang erkannt werden, wodurch auf das jeweils übertragene Farbdifferenzsignal geschlossen werden kann. Dabei handelt es sich z.B. um ein 6-Bit-Wort, das in Zeile 23 in seiner Originalform und in Zeile 335 in invertierter Form übertragen wird, wie es in Fig. 4 dargestellt ist. Das Kennsignal wird also während einer Zeitdauer von 52 µs der gesamten Zeilendauer von 64 µs übertragen.

Zur Auswertung des Signals erfolgt die Datenabtrennung bei einer Amplitude von 50% der Maximalamplitude durch einen Komparator aus dem dekodierten Leuchtdichtesignal Y oder auch aus dem Grünsignal G allein. Es hat sich gezeigt, daß beim Grünsignal G die Auswirkungen aus eventuell vorhandenen Informationen im Farbteil am geringsten sind.

Das so gewonnene, eventuell noch gefilterte Signal kann entweder direkt mit einem Mikroprozessor oder mit entsprechender Hardware dadurch ausgewertet werden, daß mit der Trigger- oder Taktflanke ein Zeitfenster gestartet wird. Damit wird erstens verhindert, daß im Zeitraum bis kurz vor der nächsten Taktflanke eine Nachtriggerung erfolgt. Außerdem wird erreicht, daß nach dem Zeitraum t der logische Pegel des Signals ausgewertet wird. Zur Erhöhung der Erkennungssicherheit kann eine Signalfilterung, eine Auswertung von Pulslänge- und Abstand und Aufeinanderfolge von Original- und inversen Datenwort ausgenutzt werden.

## Patentansprüche

1. MAC-Fernsehübertragungssystem, bei dem zwei zeilensequentielle Farbdifferenzsignale und ein Leuchtdichtesignal zeitlich nacheinander zeitkomprominiert während einer Zeile übertragen werden, **dadurch gekennzeichnet**, daß ein das System charakterisierendes Kennsignal (K) übertragen wird, das in einem Empfangsgerät selbsttätig eine Umschaltung auf MAG-Betrieb bewirkt, und daß das Kennsignal (K) eine Anzeige für das Jeweils in der Zeile übertragene Farbdifferenzsignal (R-Y oder B-Y) beinhaltet.

2. System nach Anspruch 1, **dadurch gekennzeichnet**, daß das Kennsignal (K) während einer definierten Zeile (Nr. 23 und 335) der Vertikalaustastzeit übertragen wird.

3. System nach Anspruch 1, **dadurch gekennzeichnet**, daß das Kennsignal (K) aus digitalen Wörtern besteht.

4. Sytem nach Anspruch 1, **dadurch gekennzeichnet**, daß das Kennsignal (K) in einem Videorecorder zur Umschaltung auf eine für MAC spezielle Aufbereitung wie partielle Verzögerung der Signale bei der Aufnahme dient.

## Claims

1. MAC television transmission system, in which two line-sequential colour difference signals and one luminance signal are consecutively transmitted in a time-compressed manner during a line, **characterized in that** a code signal (K) characterizing the system is transmitted, which in a receiver automatically effects a switchover to MAC operation, and that the code signal (K) contains an indication of the respective colour difference signal (R-Y) or (B-Y) transmitted in the line.

2. System according to claim 1, **characterized in that** the code signal (K) is transmitted during a defined line (No. 23 and 335) of the vertical blanking interval.

3. System according to claim 1, **characterized in that** the code signal (K) comprises digital words.

4. System according to claim 1, **characterized in that** the code signal (K) is used in a video recorder to switch over to a MAC-specific conditioning - such as partial delaying - of the signals as they are received.

## Revendications

1. Système de transmission de télévision MAC dans lequel deux signaux de différence de couleurs ligne par ligne et un signal de luminance sont transmis l'un après l'autre dans le temps en étant comprimés dans le temps pendant une ligne, **caractérisé en ce** qu'un signal d'identification (K) qui caractérise le système est transmis, signal qui provoque automatiquement une commutation dans un appareil de réception sur le mode MAC et que le signal d'identification (K) contient une indication pour le signal de différence de couleur (R-Y ou B-Y) transmis dans la ligne.

2. Système selon la revendication 1, **caractérisé en ce** que le signal d'identification (K) est transmis pendant une ligne définie (n° 23 et 335) du temps de suppression de trame.

3. Système selon la revendication 1, **caractérisé en ce** que le signal d'identification (K) est constitué par des mots numériques.

4. Système selon la revendication 1, **caractérisé en ce** que le signal d'identification (K) sert dans un magnétoscope à la commutation sur un traitement spécial pour MAC comme la temporisation partielle des signaux à l'enregistrement.
